# EUROPÄISCHE PATENTSCHRIFT

(11) **EP 2 022 595 B1**
(45) Veröffentlichungstag und Bekanntmachung des Hinweises auf die Patenterteilung: **20.10.2010**
(21) Anmeldenummer: 08450109.7
(22) Anmeldetag: 17.07.2008
(51) Int. Cl.: B23K 26/04, B23K 26/24, B23K 9/127, B23Q 15/04, G05D 3/20

(54) **Verfahren und Einrichtung zur Einstellung einer Bearbeitunsposition mit Ermittlung der echten Bearbeitungslinie im Vergleich mit der programmierten Bearbeitungsbahn des Bearbeitungswerkzeuges**
Method and apparatus for setting a processing position with determination of the real processing line in comparison with the programmed processing line of the processing tool
Procédé et dispositif de réglage d'une position d'usinage aved cétermination de la position réelle en comparaison avec la position programmée de l'outil d'usinage

(30) Priorität: 23.07.2007 AT 11652007
(43) Veröffentlichungstag der Anmeldung: 11.02.2009
(73) Patentinhaber: Trbola, Johannes F., 70184 Stuttgart (DE)
(72) Erfinder: Grünberger, Thomas, 1030 Wien (AT); Braunsteiner, Arnold, 3400 Klosterneuburg (AT); Trbola, Johannes, 70184 Stuttgart (DE)
(74) Vertreter: Gauss, Nikolai

(56) Entgegenhaltungen:
- EP-A2- 0 770 445
- JP-A- 2 089 574
- JP-A- 8 185 211
- JP-B2- 5 055 268
- US-A- 3 855 446

## Beschreibung

Die Erfindung betrifft ein Verfahren gemäß dem Oberbegriff des Patentanspruches 1 und eine Einrichtung gemäß dem Oberbegriff des Anspruchs 10 (siehe, z.B., US 3 855 446).

Bei verschiedenen Bearbeitungsaufgaben ist es erforderlich, die Position der Wirkzone eines Werkzeuges zwischen definierten Werkstückzonen hinsichtlich des Bearbeitungsergebnisses zu prüfen bzw. zu vergleichen. Dies ist insbesondere bei kleinen Werkzeuggrößen und hohen Genauigkeitsanforderungen erforderlich. Insbesondere wird dies notwendig bei Fügeverfahren, wie Laserstrahlschweißen, bei dem der Fügespalt sehr präzise getroffen werden muss, um eine sichere Schweißverbindung zu erhalten.

Derzeitiger Stand der Lösung dieser Aufgabenstellung sieht vorlaufende Sensoren zur Erfassung der Soll-Position der Wirkstelle vor der Bearbeitung vor, z.B. Triangulationssysteme zur Fügespaltfindung (DE-OS 43 12 241). Hierbei wird von einer zeitlich konstanten Zuordnung zwischen Wirksystem und Messsystem ausgegangen. Bei der Bearbeitung auftretende Änderungen können nicht berücksichtigt werden. Bekannt ist auch die Erfassung der Ist-Position nach der Bearbeitung mit einem Sensorsystem (EP 0 770 445 B1). Für die Regelung ist die Vorgabe eines Sollwertes, z.B. aus einer Fügespaltfindung oder von einem Server erforderlich.

Ziel der Erfindung ist die Erstellung eines Verfahrens, mit dem die Position eines Bearbeitungswerkzeuges gegenüber einem Werkstück für das ablaufende Bearbeitungsverfahren exakt eingeregelt werden kann, um einer am Werkstück vorgegebenen Bearbeitungsbahn genau folgen zu können.

Erfindungsgemäß wird ein Verfahren im Anspruch 1 definiert. Mit dieser Vorgangsweise kann eine exakte Nachführung des Bearbeitungswerkzeuges erfolgen.

Eine erfindungsgemäße Einrichtung ist im Patentanspruche 10 definiert. Eine derartige Einrichtung ist einfach aufgebaut und ermöglicht eine exakte Erfassung der jeweiligen Punkte, die zur Ermittlung einer Stellgröße zur Nachstellung des Bearbeitungswerkzeuges erforderlich sind, sowie eine rasche und genaue Einstellung der Bearbeitungspositionen.

Mit der erfindungsgemäßen Vorgangsweise ist es möglich, ohne großen Rechenaufwand und mit einfachem Aufbau der Nachführeinheit das Bearbeitungswerkzeug im Hinblick auf die vorgegebene Bearbeitungsbahn zu führen bzw. dieser genau zu folgen.

Eine rasche und exakte Regelung bzw. Nachführung ergibt sich mit den Merkmalen des Anspruches 2 und 11.

Eine exakte und einfache Aufnahme der Bearbeitungssituation bei gleichzeitigem einfachen Aufbau der erfindungsgemäßen Einrichtung ergibt sich mit den Merkmalen der Ansprüche 3 und 12.

Von Vorteil für eine rasche und exakte Ermittlung der Stellgröße ist es, wenn die Merkmale der Ansprüche 4 bzw. 5 bzw. 13 vorgesehen werden.

Die erfindungsgemäße Vorgangsweise ist besonders von Vorteil, wenn die vorgenommene Bearbeitung ein Fügeverfahren, vorzugsweise ein Schweißverfahren, insbesondere ein Laser- oder Elektronenstrahlschweißverfahren, ist. Es ist jedoch durchaus möglich, die erfindungsgemäße Vorgangsweise und die erfindungsgemäße Einrichtung auch für andere Bearbeitungsverfahren als Fügeverfahren einzusetzen. Es ist jegliche Art von Bearbeitungsverfahren vorteilhaft durchführbar, bei denen die Bearbeitung einer vorgegebenen Bahn folgen soll, z.B. Aufbringungsverfahren, insbesondere das Aufbringen von Beschichtungen, z.B. durch Aufsprühen oder Sputtern, das Trennen von Werkstücken mittels Laserschneiden oder mit Trennwerkzeugen, z.B. Diamantscheiben oder Kreissägeblättern, das Abarbeiten von Werkstücken längs vorgegebener Bearbeitungsbahnen od. dgl.

Für die erfindungsgemäße Vorgangsweise ist die Bearbeitungsbahn vorteilhafterweise eine Gerade oder ein Kreisbogen oder eine an diese Linien möglichst angenäherte bzw. angeglichene Bearbeitungsbahn, da damit der erforderliche Rechenaufwand und die entsprechende Rechnerkapazität gering gehalten werden können.

Eine Vereinfachung der Vorgangsweise, insbesondere im Hinblick auf den erforderlichen Rechenaufwand ergibt sich, wenn die Merkmale des Anspruches 7 erfüllt sind. Des weiteren wird erreicht, dass ein gewisser Offset zugelassen wird, ansonsten die Regelung davonlaufen könnte.

Für die Nachstellung des Bearbeitungswerkzeuges ist es zweckmäßig, wenn die Merkmale des Anspruches 8 erfüllt sind. Die Merkmale des Anspruches 9 sind insofern von Vorteil, da damit die Lage und Länge der Verbindungslinie festgelegt werden kann. So ist es beispielsweise möglich, den Abstand zwischen dem auf dem Bearbeitungsergebnis liegenden ersten Punkt und dem Ist-Punkt der Bearbeitung gering zu halten, sodass bereits nach einer kurzen Bearbeitungsstrecke das erfindungsgemäße Regelungsverfahren zur Anwendung kommen kann. Sofern der zweite Punkt auf der Bearbeitungsbahn in einem relativ größeren Abstand in Bezug auf die Ist-Position des Bearbeitungswerkzeuges gewählt wird, so kann eine Vergleichmäßigung des Regelungsverfahrens bzw. der Nachstellung des Bearbeitungswerkzeuges erreicht werden.

Im Folgenden wird die Erfindung anhand der Zeichnung beispielsweise näher erläutert.

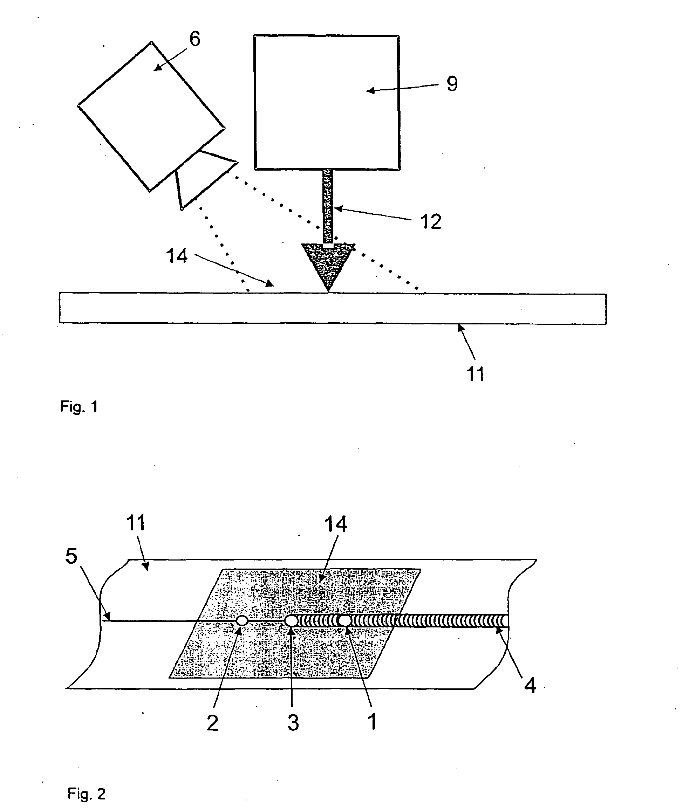

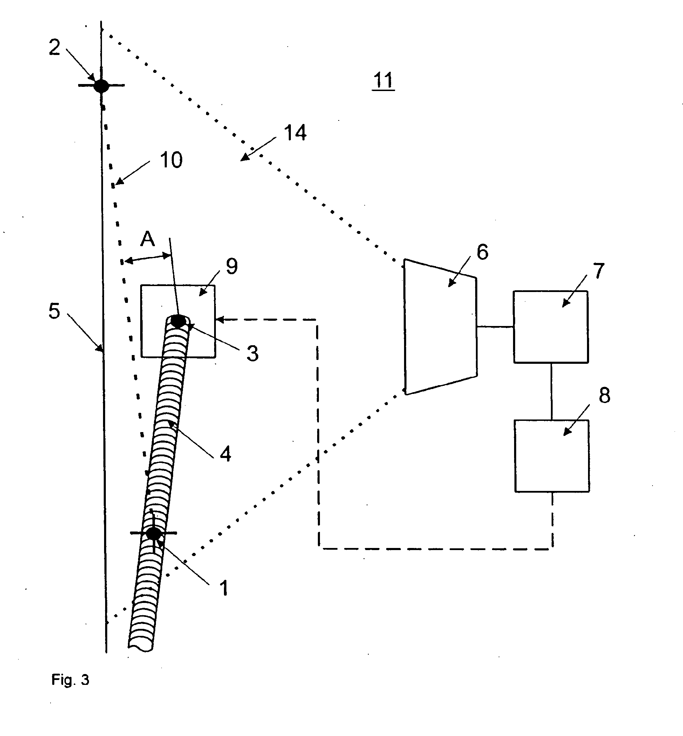

Fig. 1 zeigt schematisch eine Bearbeitungseinheit. Fig. 2 zeigt schematisch eine Ansicht des zu bearbeitenden Werkstückes. Fig. 3 zeigt schematisch die Ermittlung der Stellgröße für das Bearbeitungswerkzeug.

Fig. 1 zeigt schematisch die Anordnung eines Bearbeitungswerkzeuges 9, insbesondere eines Bearbeitungskopfes, oberhalb eines Werkstückes 11, das zwei längs einer Bearbeitungsbahn 5 zu fügende bzw. zu verschweißende Teile umfasst. Im vorliegenden Fall handelt es sich um ein Laserschweißgerät, dessen Bearbeitungsstrahl 12 auf das zu bearbeitende, die beiden Teile umfassende, Werkstück 11 gerichtet ist und dort eine entsprechende Schweißbearbeitung vornimmt, insbesondere einen den Fügespalt des Werkstückes 11 mittels einer Schweißbahn 4 schließt. Bei derartigen Fügeverfahren werden die zwei Werkstückteile nebeneinander unter Ausbildung des Fügespaltes angeordnet. Der Fügespalt besitzt entweder die Form einer Geraden oder einer Kreisbahn. Der Verlauf dieses Fügespaltes gibt die Bearbeitungsbahn 5 vor, welcher das Bearbeitungswerkzeug 9 folgen soll.

In Fig. 2 ist ein Werkstück 11 in Draufsicht dargestellt. Längs der Bearbeitungsbahn 5 soll der im Werkstück 11 vorhandene Fügespalt mittels einer Schweißnaht 4 geschlossen werden. Die Schweißnaht 4 ist bis zu der Ist-Position 3 des Bearbeitungswerkzeuges 9 ausgeführt.

Des Weiteren sind aus Fig. 2 zwei Punkte 1, 2 ersichtlich. Bei dem ersten Punkt 1 handelt es sich um einen auf der Schweißnaht liegenden Punkt; bei dem zweiten Punkt 2 handelt es sich um einen auf der Fügebahn 5 liegenden Punkt.

Des Weiteren ist aus Fig. 2 das Gesichtsfeld 14 einer Videokamera einer Bildverarbeitungseinheit 6 ersichtlich. Das Gesichtsfeld 14 dieser Bildaufnahmeeinheit 6 nimmt die Punkte 1 und 2 sowie den Ist-Punkt 3 der stattfindenden Bearbeitung gleichzeitig auf.

Anhand von Fig. 3 wird die erfindungsgemäße Vorgangsweise näher erläutert. Auf einem Werkstück 11 ist eine Bearbeitungsbahn 5 vorgegeben. Wie in der dargestellten Draufsicht ersichtlich, wurde die ausgebildete Schweißnaht 4 nicht auf der vorgegebenen Fügebahn 5 sondern fehlerhaft in einem Abstand davon ausgeführt. Dieser Fehler kann durch eine Dejustierung des Werkzeugkopfes 9 oder des Bearbeitungsstrahles 12 gegenüber dem restlichen Bearbeitungswerkzeug verursacht sein. Es besteht somit der Bedarf, das Bearbeitungswerkzeug 9 bzw. den Ist-Punkt 3 der Bearbeitung zu verstellen und zwar derart, dass der Ist-Punkt 3 möglichst exakt auf der Führungsbahn 5 zu liegen kommt.

Entsprechend dem erfindungsgemäßen Verfahren wird laufend oder aufeinanderfolgend in vorgegebenen kurzen Zeitabständen ein erster Punkt 1 auf, der vom Bearbeitungswerkzeug 9 erstellten Schweißnaht 4 vorgegeben bzw. ermittelt. Des Weiteren wird ein zweiter Punkt 2 auf der Bearbeitungsbahn 5 gewählt bzw. ermittelt. Sodann wird zwischen dem ersten Punkt 1 und dem zweiten Punkt 2 eine Verbindungsgerade 10 ermittelt. Des Weiteren wird der Abstand A zwischen dem im Ist-Punkt 3 und der Geraden 10 ermittelt und der Ist-Punkt (3) der Bearbeitung um ein dem Abstand A entsprechendes Maß oder ein dazu proportionales Maß in Richtung der Geraden 10 bzw. in Richtung auf die Bearbeitungsbahn 5 verstellt. Dieses Nachjustieren wird iteriert.

Die Ermittlung der Lage der Punkte 1, 2 und der Ist-Position 3 erfolgt in einer der Bildaufnahmeeinheit 6 nachgeschalteten Auswerteinheit 7. An diese Auswerteeinheit 7 ist eine Nachführ- bzw. Interpolationseinheit 8 angeschlossen, in der die entsprechende Gerade 10 und der Abstand des Ist-Punktes 3 von dieser Geraden 10 ermittelt werden. Mit dieser Nachführ- bzw. Interpolationseinheit 8 bzw. deren Ausgangssignal erfolgt auch die Verstellung des Bearbeitungswerkzeuges 9. Derartige Bearbeitungswerkzeuge 9 sind üblicherweise darauf eingerichtet, zumindest in der XY-Ebene bzw. in der Bearbeitungsebene beliebig verstellt werden zu können.

Für eine exakte Nachstellung kann es von Vorteil sein, wenn die Nachführ- bzw. Interpolationseinheit 8 einen PID-Regler aufweist, dem der ermittelte Abstand A als Stellgröße bzw. Regelabweichung zugeführt ist und dessen Ausgangssignal dem Bearbeitungswerkzeug 9 als Korrekturwert der Ist-Position 3 zugeführt ist.

Es ist zweckmäßig, wenn für die Aufnahme des ersten Punktes 1, des zweiten Punktes 2 und des Ist-Punktes 3 der Bearbeitung eine einzige bzw. dieselbe Bildaufnahmeeinheit 6 vorgesehen ist. Durch Anordnung einer einzigen Bildaufnahmeeinheit 6 wird die Erstellung der erfindungsgemäßen Einrichtung wirtschaftlich möglich. Des Weiteren wird die Auswertung der aufgenommenen Bilder vereinfacht.

Für die exakte Ermittlung der Lage ist es zweckmäßig, die Ermittlung der Position des ersten Punktes 1 auf dem Bearbeitungsergebnis 4 und des zweiten Punktes 2 auf der Bearbeitungsbahn 5 mittels Grauwert- oder Farbbildauswerteverfahren bzw. Triangulationsverfahren und die des Ist-Punktes 3 der Bearbeitung mit Grauwert- oder Farbbildauswerteverfahren zu ermitteln. Damit wird eine exakte Regelung der Nachstellung des Bearbeitungswerkzeuges 9 mit der Nachstell- bzw. Interpolationseinheit 8 erreicht.

Es kann vorgesehen sein, dass als erster Punkt 1 und als zweiter Punkt 2 jeweils ein in einem bestimmten vorgegebenen Abstand von der Bearbeitungsposition 3 auf dem Bearbeitungsergebnis 4, insbesondere Schweißnaht, und der Bearbeitungsbahn 5 gelegener Punkt herangezogen wird. Damit wird es möglich, auch kurz nach Beginn der Erstellung einer Schweißnaht eine Nachführung des Bearbeitungswerkzeuges 9 vorzunehmen.

Sofern es sich bei der Bearbeitungsbahn 5 um eine Kreisbahn handelt, so wird eine entsprechende Kreisbahn derselben Krümmung durch den ersten Punkt 1 und den zweiten Punkt 2 gelegt und der Ist-Punkt 3 der Bearbeitung wird zur Nachjustierung in Richtung dieses Kreisbogens, der dem Verlauf der Bearbeitungsbahn 5 entspricht, bewegt.

## Patentansprüche

1. Verfahren zur Einstellung bzw. Einregelung der Bearbeitungsposition bzw. des Ist-Punktes (3) der Bearbeitung eines eine Relativbewegung gegenüber einem Werkstück (11) durchführenden Bearbeitungswerkzeuges (9) wobei
laufend oder aufeinanderfolgend in vorgegebenen kurzen Zeitabständen ein erster Punkt (1) auf dem vom Bearbeitungswerkzeug (9) erbrachten Bearbeitungsergebnis (4) und ein zweiter Punkt (2) auf einer vorgegebenen, einer Geraden oder einem Kreisbogen entsprechenden Bearbeitungsbahn (5) auf dem zu bearbeitenden Werkstück (11) ermittelt werden,
**dadurch gekennzeichnet, dass** zwischen diesen beiden Punkten (1, 2) eine Verbindungslinie (10) errichtet bzw. berechnet wird, die entweder eine Gerade ist oder ihrer Form und ihrem Verlauf nach der kreisbogenförmigen Bearbeitungsbahn (5) entspricht, und
dass der Abstand (A), insbesondere Normalabstand, des Ist-Punktes (3) der Bearbeitung von der Verbindungslinie (10) ermittelt und als Stellgröße bzw. Maß für die Berechnung eines Korrekturwertes für eine Verstellung des Bearbeitungswerkzeuges (9) in Richtung auf die Verbindungslinie (10) und die Bearbeitungsbahn (5) herangezogen wird.

2. Verfahren nach Anspruch 1, **dadurch gekennzeichnet, dass** der Abstand (A) als Stellgröße bzw. Regelabweichung für eine PID-Regelung der Lage des Ist-Punktes (3) des Bearbeitungswerkzeuges (9) herangezogen wird.

3. Verfahren nach Anspruch 1 oder 2, **dadurch gekennzeichnet, dass** die Position des ersten Punktes (1) und des zweiten Punktes (2) sowie die Bearbeitungsposition (3) mit einer, vorzugsweise bezüglich der Bearbeitungsposition (3) voreilend angeordneten, Bildaufnahmeeinheit (6), insbesondere mit ein und derselben Bildaufnahmeeinheit, unter Anwendung von Bildverarbeitungs- und -auswerteverfahren, vorteilhafterweise gemeinsam bzw. gleichzeitig, ermittelt werden.

4. Verfahren nach einem der Ansprüche 1 bis 3, **dadurch gekennzeichnet, dass** die Ermittlung der Position des ersten Punktes (1) und des zweiten Punktes (2) auf dem Bearbeitungsergebnis (4) mittels Grauwert- oder Farbbildauswerteverfahren bzw. Triangulationsverfahren erfolgt.

5. Verfahren nach einem der Ansprüche 1 bis 4, **dadurch gekennzeichnet, dass** der Ist-Punkt (3) der Bearbeitung mit Grauwert- oder Farbbildauswerteverfahren ermittelt wird.

6. Verfahren nach einem der Ansprüche 1 bis 5, **dadurch gekennzeichnet, dass** die vorgenommene Bearbeitung ein Fügeverfahren, vorzugsweise ein Schweißverfahren, insbesondere ein Laser- oder Elektronenstrahlschweißverfahren, ist und dass das Bearbeitungsergebnis (4) eine Schweißnaht ist.

7. Verfahren nach einem der Ansprüche 1 bis 6, **dadurch gekennzeichnet, dass** als erster Punkt (1) ein auf der Schweißnaht liegender Punkt, insbesondere ein auf der Längsmitte oder einer ihrer Seitenkanten liegender Punkt oder ein innerhalb eines vorgegebenen Abstandsbereiches von der Längsmitte bzw. den Seitenkanten liegender Punkt, ermittelt wird, und als zweiter Punkt (2) ein auf der vorgegebenen Fügebahn (5) gelegener Punkt bzw., sofern es sich bei der Fügebahn (5), insbesondere in ihrer Längsmitte, oder innerhalb eines vorgegebenen Abstandsbereiches von ihrer Längsmitteum eine Linie handelt, ein auf dieser Linie oder innerhalb eines vorgegebenen Abstandsbereiches von dieser Linie gelegener Punkt ermittelt wird.

8. Verfahren nach einem der Ansprüche 1 bis 7, **dadurch gekennzeichnet, dass** eine Nachstellung des Bearbeitungswerkzeuges (9) erfolgt, wenn die Stellgröße bzw. der berechnete Korrekturwert einen vorgegebenen Schwellwert übersteigt.

9. Verfahren nach einem der Ansprüche 1 bis 8, **dadurch gekennzeichnet, dass** als erster Punkt (1) und als zweiter Punkt (2) jeweils ein in einem bestimmten vorgegebenen Abstand von der Bearbeitungsposition (3) auf dem Bearbeitungsergebnis (4), insbesondere Schweißnaht, und der Bearbeitungsbahn (5) gelegene Punkt herangezogen wird.

10. Einrichtung zur Einstellung bzw. Einregelung der Bearbeitungsposition bzw. des Ist-Punktes (3) der Bearbeitung eines eine Relativbewegung gegenüber einem Werkstück (11) durchführenden Bearbeitungswerkzeuges (9), wobei eine Bildaufnahmeeinheit (6) mit nachgeordneter Auswerteeinheit (7) vorgesehen ist, mit der laufend oder aufeinanderfolgend in vorgegebenen kurzen Zeitabständen ein erster Punkt (1) auf dem vom Bearbeitungswerkzeug (9) erbrachten Bearbeitungsergebnis (4) und ein zweiter Punkt (2) auf einer vorgegebenen, einer Geraden oder einem Kreisbogen entsprechenden Bearbeitungsbahn (5) auf dem zu bearbeitenden Werkstück (11) ermittelt werden,
**dadurch gekennzeichnet, dass** an die Auswerteeinheit (7) eine Nachführ- bzw. lnterpolationseinheit (8) angeschlossen ist, mit der zwischen diesen beiden Punkten (1, 2) eine Verbindungslinie (10) errichtet bzw. berechnet wird, die entweder eine Gerade ist oder ihrer Form und ihrem Verlauf nach der kreisbogenförmigen Bearbeitungsbahn (5) entspricht, und
dass der Abstand (A), insbesondere Normalabstand, des Ist-Punktes (3) der Bearbeitung von der Verbindungslinie (10) ermittelt und als Stellgröße bzw. Maß für die Berechnung eines Korrekturwertes für eine Verstellung des Bearbeitungswerkzeuges (9) in Richtung auf die Verbindungslinie (10) und die Bearbeitungsbahn (5) dem Bearbeitungswerkzeug (9) zugeführt ist.

11. Einrichtung nach Anspruch 10, **dadurch gekennzeichnet, dass** die Nachführ- bzw. Interpolationseinheit (8) einen PID-Regler aufweist, dem der ermittelte Abstand (A) als Stellgröße bzw. Regelabweichung zugeführt ist und dessen Ausgangssignal dem Bearbeitungswerkzeug (9) als Korrekturwert der Ist-Position (3) zugeführt ist.

12. Einrichtung nach Anspruch 10 oder 11, **dadurch gekennzeichnet, dass** für die Aufnahme des ersten Punktes (1), des zweiten Punktes (2) und des Ist-Punktes (3) der Bearbeitung eine einzige bzw. dieselbe Bildaufnahmeeinheit (6) vorgesehen ist.

13. Einrichtung nach einem der Ansprüche 10 bis 12, **dadurch gekennzeichnet, dass** die Auswerteeinheit (7) zur Bildauswertung mittels Triangulationsverfahren und/oder Farb-/Grauwertbildauswerteverfahren eingerichtet ist.

14. Einrichtung nach einem der Ansprüche 10 bis 13, **dadurch gekennzeichnet, dass** das Bearbeitungswerkzeug (9) ein Laser- oder Elektronenstahlschweißgerät, ein Sprühwerkzeug oder ein Schneidwerkzeug ist.

## Claims

1. Method for setting or adjusting the processing position or the actual point (3) of the processing operation of a processing tool (9) performing a movement relative to a workpiece (11), wherein a first point (1) on the processing result (4) produced by the processing tool (9) and a second point (2) on a predetermined processing path (5), corresponding to a straight line or a circular arc, on the workpiece (11) to be processed are determined continuously or successively at predetermined short time intervals,
**characterized in that** a connecting line (10) is constructed or calculated between these two points (1, 2), said connecting line (10) either being a straight line or corresponding in its shape and its course to the circular-arc-shaped processing path (5), and
**in that** the distance (A), in particular the normal distance, of the actual point (3) of the processing from the connecting line (10) is determined and is used as a manipulated variable or as a measure of the calculation of a correction value for an adjustment of the processing tool (9) in the direction of the connecting line (10) and the processing path (5).

2. Method according to Claim 1, **characterized in that** the distance (A) is used as a manipulated variable or a system deviation for a PID control of the position of the actual point (3) of the processing tool (9).

3. Method according to Claim 1 or 2, **characterized in that** the position of the first point (1) and the position of the second point (2) and the processing position (3) are determined, advantageously jointly or simultaneously, by means of an image recording unit (6) preferably arranged in advance of the processing position (3), in particular by means of one and the same image recording unit, with the use of image processing methods and image analysing methods.

4. Method according to one of Claims 1 to 3, **characterized in that** the position of the first point (1) and the position of the second point (2) on the processing result (4) are determined by means of grey-scale or colour image analysing methods or triangulation methods.

5. Method according to one of Claims 1 to 4, **characterized in that** the actual point (3) of the processing is determined by means of grey-scale or colour image analysing methods.

6. Method according to one of Claims 1 to 5, **characterized in that** the processing carried out is a joining method, preferably a welding method, in particular a laser or electron beam welding method, and **in that** the processing result (4) is a weld.

7. Method according to one of Claims 1 to 6, **characterized in that** a point lying on the weld, in particular a point lying at the longitudinal centre or on one of its side edges, or a point lying within a predetermined distance from the longitudinal centre or the side edges, is determined as the first point (1), and a point situated on the predetermined joining path (5) or, provided the joining path (5) is a line, in particular in its longitudinal centre, or within a predetermined distance from its longitudinal centre, a point situated on this line or within a predetermined distance from this line is determined as the second point (2).

8. Method according to one of Claims 1 to 7, **characterized in that** the processing tool (9) is readjusted if the manipulated variable or the calculated correction value exceeds a predetermined threshold value.

9. Method according to one of Claims 1 to 8, **characterized in that** a point situated at a specific predetermined distance from the processing position (3) on the processing result (4), in particular a weld, and on the processing path (5) is in each case selected as the first point (1) and the second point (2).

10. Apparatus for setting or adjusting the processing position or the actual point (3) of the processing operation of a processing tool (9) performing a movement relative to a workpiece (11), wherein an image recording unit (6) with downstream analysing unit (7) is provided, with which a first point (1) on the processing result (4) produced by the processing tool (9) and a second point (2) on a predetermined processing path (5), corresponding to a straight line or a circular arc, on the workpiece (11) to be processed are determined continuously or successively at predetermined short time intervals,
**characterized in that** there is attached to the analysing unit (7) a tracking or interpolation unit (8) with which a connecting line (10) is constructed or calculated between these two points (1, 2), said connecting line (10) either being a straight line or corresponding in its shape and its course to the circular-arc-shaped processing path (5), and
**in that** the distance (A), in particular the normal distance, of the actual point (3) of the processing from the connecting line (10) is determined and is fed to the processing tool (9) as a manipulated variable or as a measure of the calculation of a correction value for an adjustment of the processing tool (9) in the direction of the connecting line (10) and the processing path (5).

11. Apparatus according to Claim 10, **characterized in that** the tracking or interpolation unit (8) has a PID controller to which the determined distance (A) is fed as a manipulated variable or a system deviation and the output signal of which is fed to the processing tool (9) as a correction value of the actual position.

12. Apparatus according to Claim 10 or 11, **characterized in that** a single image recording unit (6) or the same image recording unit (6) is provided for recording the first point (1), the second point (2) and the actual point (3) of the processing.

13. Apparatus according to one of Claims 10 to 12, **characterized in that** the analysing unit (7) is set up for image analysis by means of triangulation methods and/or colour/grey-scale analysing methods.

14. Apparatus according to one of Claims 10 to 13, **characterized in that** the processing tool (9) is a laser or electron beam welding set, a spraying tool or a cutting tool.

## Revendications

1. Procédé pour le réglage ou l'ajustement de la position de traitement ou le point effectif (3) du traitement d'un outil de traitement (9) exécutant un mouvement relatif par rapport à une pièce usinée (11),
un premier point (1) étant calculé, en continu ou de manière consécutive par intervalles de temps courts prédéterminés, sur le résultat de traitement (4) réalisé par l'outil de traitement (9), et un deuxième point (2) étant calculé sur une voie de traitement (5) prédéterminée, correspondant à une ligne droite ou à un arc de cercle sur la pièce usinée (11) à traiter,
**caractérisé en ce qu'**une ligne de liaison (10) est établie ou calculée entre ces deux points (1, 2), sous forme de ligne droite ou sa forme et son parcours correspondent à la voie de traitement (5) en forme d'arc de cercle,
et **en ce que** l'espacement (A), en particulier l'espacement normal entre le point effectif (3) du traitement et la ligne de liaison (10) est calculé et pris en compte comme grandeur de réglage ou mesure pour le calcul d'une valeur de correction pour un déplacement de l'outil de traitement (9) en direction de la ligne de liaison (10) et de la voie de traitement (5).

2. Procédé selon la revendication 1, **caractérisé en ce que** l'espacement (A) est pris en compte comme grandeur de réglage ou comme écart de réglage pour un réglage PID de la position du point effectif (3) de l'outil de traitement (9).

3. Procédé selon la revendication 1 ou 2, **caractérisé en ce que** la position du premier point (1) et du deuxième point (2) ainsi que la position de traitement (3) sont calculées avec une unité de capture d'image (6), installée de préférence en avance relativement à la position de traitement (3), en particulier avec une seule et même unité de capture d'image, à l'aide de procédés d'évaluation et de traitement d'image, avantageusement ensemble ou simultanément.

4. Procédé selon l'une des revendications 1 à 3, **caractérisé en ce que** le calcul de la position du premier point (1) et du deuxième point (2) sur le résultat de traitement (4) est effectué au moyen d'un procédé de triangulation ou d'un procédé d'évaluation de valeurs de gris ou d'image couleur.

5. Procédé selon l'une des revendications 1 à 4, **caractérisé en ce que** le point effectif (3) du traitement est calculé à l'aide d'un procédé d'évaluation de valeurs de gris ou d'image couleur.

6. Procédé selon l'une des revendications 1 à 5, **caractérisé en ce que** le traitement réalisé est un procédé d'assemblage, de préférence un procédé de soudage, en particulier un procédé de soudage au laser ou au faisceau d'électrons, et **en ce que** le résultat de traitement (4) est une soudure.

7. Procédé selon l'une des revendications 1 à 6, **caractérisé en ce que** comme premier point (1), un point situé sur la soudure, en particulier un point situé sur la ligne médiane longitudinale ou l'une de ses arêtes latérales, ou encore un point situé dans une zone d'espacement prédéterminée par rapport à la ligne médiane longitudinale ou aux arêtes latérales est calculé, et, comme deuxième point (2), un point situé sur la voie d'assemblage (5) prédéterminée est calculé ou, si en ce qui concerne la voie d'assemblage (5), en particulier sur sa ligne médiane longitudinale ou dans une zone d'espacement prédéterminée par rapport à sa ligne médiane longitudinale, il s'agit d'une ligne, un point situé sur cette ligne ou dans une zone d'espacement prédéterminée par rapport à cette ligne est calculé.

8. Procédé selon l'une des revendications 1 à 7, **caractérisé en ce qu'**un repositionnement de l'outil de traitement (9) est effectué lorsque la grandeur de réglage ou la valeur de correction calculée dépasse une valeur seuil prédéterminée.

9. Procédé selon l'une des revendications 1 à 8, **caractérisé en ce que** comme premier point (1) et comme deuxième point (2), un point situé à une certaine distance prédéterminée de la position de traitement (3) sur le résultat de traitement (4), en particulier la soudure, et sur la voie de traitement (5) est à chaque fois pris en compte.

10. Dispositif pour le réglage ou l'ajustement de la position de traitement ou du point effectif (3) du traitement d'un outil de traitement (9) exécutant un mouvement relatif par rapport à une pièce usinée (11), une unité de capture d'image (6) suivie d'une unité d'évaluation (7) étant prévue, avec laquelle manière un premier point (1) est calculé, en continu ou de façon consécutive par intervalles de temps courts prédéterminés, sur le résultat de traitement (4) réalisé par l'outil de traitement (9), et un deuxième point (2) est calculé sur une voie de traitement (5) prédéterminée, correspondant à une ligne droite ou à un arc de cercle sur la pièce usinée (11) à traiter,
**caractérisé en ce qu'**une unité d'interpolation ou de poursuite (8) est raccordée à l'unité d'évaluation (7), avec laquelle une ligne de liaison (10) est établie ou calculée entre ces deux points (1, 2), sous la forme d'une ligne droite, ou sa forme et son parcours correspondant à la voie de traitement (5) en forme d'arc de cercle, et
**en ce que** l'espacement (A), en particulier l'espacement normal, entre le point effectif (3) du traitement et la ligne de liaison (10) est calculé et appliqué à l'outil de traitement (9) comme grandeur de réglage ou mesure pour le calcul d'une valeur de correction pour un déplacement de l'outil de traitement (9) dans la direction de la ligne de liaison (10) et de la voie de traitement (5).

11. Dispositif selon la revendication 10, **caractérisé en ce que** l'unité d'interpolation ou de poursuite (8) comporte un réglage PID, auquel est appliqué l'espacement calculé (A), comme grandeur de réglage ou comme écart de réglage, et dont le signal de sortie est appliqué à l'outil de traitement (9) comme valeur de correction de la position effective (3).

12. Dispositif selon la revendication 10 ou 11, **caractérisé en ce que** pour l'enregistrement du premier point (1), du deuxième point (2) et du point effectif (3) du traitement, il est prévu une seule et même unité de capture d'image (6).

13. Dispositif selon l'une des revendications 10 à 12, **caractérisé en ce que** l'unité d'évaluation (7) est conçue pour l'évaluation d'image, à l'aide d'un procédé de triangulation et/ou d'un procédé d'évaluation de valeurs de gris ou d'image couleur.

14. Dispositif selon l'une des revendications 10 à 13, **caractérisé en ce que** l'outil de traitement (9) est un appareil de soudage à faisceau d'électrons ou laser, un pulvérisateur ou un outil de coupe.
